# EUROPEAN PATENT APPLICATION

(11) **EP 4 782 234 A1**
(43) Date of publication of application: **29.07.2026**
(21) Application number: 25810771.3
(22) Date of filing: 12.11.2025
(51) Int. Cl.: B60H 1/00, B60H 1/14, B60H 1/32, B60K 11/02, B60K 1/00, B60L 58/26, B60L 58/27

(54) **THERMAL MANAGEMENT SYSTEM AND VEHICLE**

(30) Priority: 04.12.2024 CN 202411774033; 14.10.2025 CN 202522176708 U
(71) Applicant: Zhejiang Leapmotor Technology Co., Ltd, Hangzhou, Zhejiang 310051 (CN)
(72) Inventor: YE, Lin, Hangzhou, Zhejiang 310051 (CN); XIA, Mingyan, Hangzhou, Zhejiang 310051 (CN)
(74) Representative: Novagraaf Technologies
(86) International application number: PCT/CN2025/134351
(87) International publication number: WO 2026/118816

(57) **Abstract**

The present invention discloses a thermal management system and a vehicle device, and belongs to the technical field of vehicles. The thermal management system includes a refrigerant loop, a battery water loop, a motor water loop, a passenger compartment water loop and a control valve module, and the control valve module is connected among each of the plurality of battery water sub-loops, each of the plurality of motor water sub-loops and the passenger compartment water loop, wherein the control valve module is configured to control each of the plurality of battery water sub-loops and each of the plurality of motor water sub-loops to selectively communicate with the passenger compartment water loop, so that heat exchange is selectively performed among each of the plurality of refrigerant sub-loops, each of the plurality of battery water sub-loops, each of the plurality of motor water sub-loops and the passenger compartment water loop. According to the thermal management system provided in the present invention, the battery water loop, the motor water loop and the passenger compartment water loop are coupled to realize comprehensive management of the heat of a plurality of modules, thereby further reducing the energy consumption of the vehicle and improving the endurance of the vehicle.

## Description

### Cross-Reference to Related Application

The present application claims the priority of Chinese Patent Application 202411774033.1 filed on December 04, 2024 and Chinese Patent Application 202522176708.9 filed on October 15, 2025, and the entire contents of which are herein incorporated by reference.

### Technical Field

The present invention relates to the technical field of vehicles, and in particular, to a thermal management system and a vehicle device.

### Background

A vehicle includes a battery and a motor, the battery provides electric energy for the vehicle, and the motor is used for driving the vehicle to travel. The battery (motor) generates heat at work, and thus it is necessary to cool the battery (motor); or, when an external ambient temperature is lower than a normal working temperature of the battery (motor), it is necessary to perform thermal insulation on the battery (motor), and thus it is necessary to perform thermal management on the battery and the motor. The vehicle is further provided with an air conditioner, and the air conditioner is used for the refrigeration or heating of a passenger compartment, therefore it is also necessary to perform thermal management on the passenger compartment. In the related art, a thermal management system includes three subsystems, that is, passenger compartment thermal management, battery thermal management and motor thermal management, and the subsystems are relatively independent, which makes it difficult to realize comprehensive management of heat, so that the energy consumption of the vehicle is relatively high, thus affecting the endurance of the vehicle.

### Summary

The present invention provides a thermal management system and a vehicle, which can solve the technical problem of the relatively high energy consumption of the vehicle affecting the endurance.

In order to solve the above technical problem, one aspect of the present invention provides a thermal management system, including: a refrigerant loop, a battery water loop, a motor water loop, a passenger compartment water loop and a control valve module, wherein the refrigerant loop includes a compressor, a first heat exchanger and a battery cooler, and the first heat exchanger and the battery cooler are in communication with the compressor to form a plurality of refrigerant sub-loops; the battery water loop is used for adjusting a temperature of a battery, the battery water loop includes a plurality of battery water sub-loops, and one of the plurality of battery water sub-loops is in communication with the battery cooler; the motor water loop is used for adjusting a temperature of a motor, and the motor water loop includes a plurality of motor water sub-loops; the passenger compartment water loop is used for heating of a passenger compartment, and the passenger compartment water loop is in communication with the first heat exchanger; the control valve module is connected among each of the plurality of battery water sub-loops, each of the plurality of motor water sub-loops and the passenger compartment water loop; and the control valve module is configured to control each of the plurality of battery water sub-loops and each of the plurality of motor water sub-loops to selectively communicate with the passenger compartment water loop, so that heat exchange is selectively performed among each of the plurality of refrigerant sub-loops, each of the plurality of battery water sub-loops, each of the plurality of motor water sub-loops and the passenger compartment water loop.

Another aspect of the present invention provides a vehicle, including the thermal management system as described above.

According to the thermal management system provided in the present invention, first, the refrigerant loop includes the plurality of refrigerant sub-loops, the battery water loop includes the plurality of battery water sub-loops, the motor water loop includes the plurality of motor water sub-loops, so that the refrigerant loop, the battery water loop and the motor water loop each has a plurality of optional thermal management modes, so as to select a corresponding mode according to requirements to realize refined management of the heat of a vehicle, thereby reducing the energy consumption of the vehicle; and second, the thermal management system includes the control valve module, which can control each battery water sub-loop and each motor water sub-loop to selectively communicate with the passenger compartment water loop, so that heat exchange is selectively performed among each refrigerant sub-loop, each battery water sub-loop, each motor water sub-loop and the passenger compartment water loop, so as to couple the battery water loop, the motor water loop and the passenger compartment water loop, thereby realizing comprehensive management of the heat of a plurality of modules, thus further reducing the energy consumption of the vehicle and improving the endurance of the vehicle.

### Brief Description of the Drawings

Fig. 1 is a schematic structural diagram of one embodiment of a thermal management system provided in the present invention;
Fig. 2 is a schematic structural diagram of another embodiment of a thermal management system provided in the present invention;
Fig. 3 is a schematic diagram of a circulation state of a first refrigerant sub-loop in an embodiment of a thermal management system provided in the present invention;
Fig. 4 is a schematic diagram of a circulation state of a second refrigerant sub-loop in an embodiment of a thermal management system provided in the present invention;
Fig. 5 is a schematic diagram of a circulation state of a third refrigerant sub-loop in an embodiment of a thermal management system provided in the present invention;
Fig. 6 is a schematic diagram of a circulation state of a fourth refrigerant sub-loop in an embodiment of a thermal management system provided in the present invention;
Fig. 7 is a schematic structural diagram of still another embodiment of a thermal management system provided in the present invention;
Fig. 8 is a schematic structural diagram of yet another embodiment of a thermal management system provided in the present invention;
Figs. 9-19 are conduction state schematic diagrams of an eight-way valve of the thermal management system shown in Fig. 7 in a plurality of working modes;
Figs. 20-30 are conduction state schematic diagrams of a nine-way valve of the thermal management system shown in Fig. 8 in a plurality of working modes;
Fig. 31 is a schematic diagram of a partial structure of one embodiment of a thermal management system provided in the present invention;
Fig. 32 is a schematic diagram of a partial structure of another embodiment of a thermal management system provided in the present invention;
Fig. 33 is a schematic diagram of a partial structure of still one embodiment of a thermal management system provided in the present invention; and
Fig. 34 is a schematic diagram of a frame of an embodiment of a vehicle provided in the present invention.

### Detailed Description of the Embodiments

The present invention is further described in detail below in combination with the drawings and embodiments. It is particularly pointed out that the following embodiments are only used for illustrating the present invention, but do not limit the scope of the present invention. Similarly, the following embodiments are only some, but not all, of the embodiments of the present invention, and all other embodiments, obtained by those ordinary skilled in the art without creative efforts, shall fall within the protection scope of the present invention.

In the description of the present invention, "a plurality of" means at least two, for example, two, three, or the like, unless specifically defined otherwise. The terms "first", "second" and "third" in the embodiments of the present invention are used for descriptive purposes only, but cannot be understood as indicating or implying relative importance or implicitly indicating the number of indicated technical features. Thus, features defined with "first", "second", and "third" can explicitly or implicitly include at least one of the features. All directional indications (e.g., upper, lower, left, right, front, rear, ... ...) in the embodiments of the present invention are only used for explaining relative positional relationships, movement conditions and the like between various components at a specific posture (as shown in the drawings), and if the specific posture changes, the directional indication changes accordingly. The terms "include" and "have" and any variations thereof in the embodiments of the present invention are intended to cover non-exclusive inclusions. For example, processes, methods, systems, products or devices including a series of steps or units are not necessarily limited to the listed steps or units, but optionally further includes steps or units that are not listed, or optionally further includes other steps or components that are inherent to these processes, methods, products or devices.

Reference herein to "an embodiment" means that a particular feature, structure or characteristic described in combination with the embodiment is included in at least one embodiment of the present invention. The appearances of the phrase at various positions in the specification do not necessarily refer to the same embodiment, nor are independent or alternative embodiments mutually exclusive of other embodiments. Those skilled in the art explicitly and implicitly understand that the embodiments described herein are combined with other embodiments.

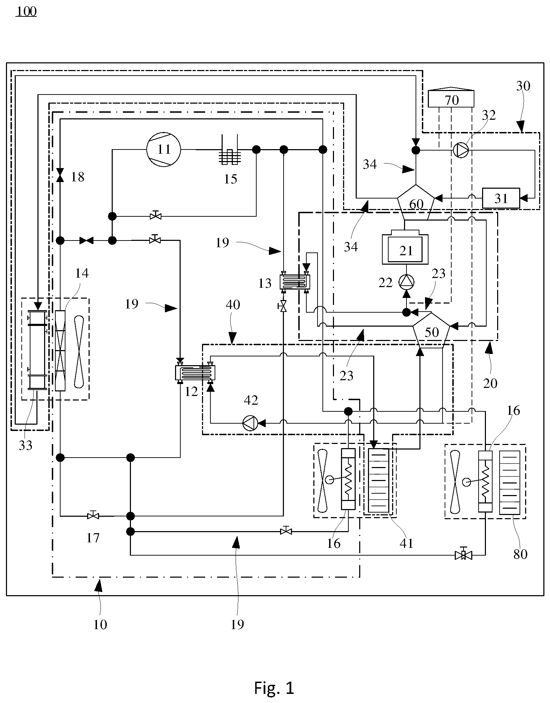

The present invention provides a thermal management system 100. Referring to Fig. 1, the thermal management system 100 can include a refrigerant loop 10, a battery water loop 20, a motor water loop 30, a passenger compartment water loop 40, and a control valve module, wherein the control valve module includes a first control valve assembly 50 and a second control valve assembly 60. The refrigerant loop 10 can absorb or release heat by changing the state of a refrigerant. The refrigerant loop 10 includes a compressor 11, a first heat exchanger 12, and a battery cooler 13, wherein the compressor 11 my change the state of the refrigerant by working, and the state change process of the refrigerant is accompanied by heat absorption or heat release, so that the heat of a passenger compartment, a battery or a motor is absorbed, or heat is released to the passenger compartment, the battery or the motor, so as to adjust a temperature of the passenger compartment, the battery or the motor. The first heat exchanger 12 is used for exchanging heat with the passenger compartment water loop 40, and the first heat exchanger 12 is a plate heat exchanger. The battery cooler 13 is used for exchanging heat with the battery water loop 20, the first heat exchanger 12 and the battery cooler 13 are in communication with the compressor 11 to form a plurality of refrigerant sub-loops 19, there is two, three, four or more refrigerant sub-loops 19, and the greater the number of the refrigerant sub-loops 19 is, the more optional thermal management modes the refrigerant loop 10 has. Since the refrigerant loop 10 includes the plurality of refrigerant sub-loops 19, the refrigerant loop 10 has a plurality of optional thermal management modes, so as to select a corresponding mode according to requirements to realize refined management of the heat of a vehicle, thereby reducing the energy consumption of the vehicle.

The battery water loop 20 includes a battery 21 and a battery water pump 22, as shown in Fig. 1. The battery water loop 20 is used for adjusting a temperature of the battery 21. The battery water pump 22 pressurizes water at work, so that the water circularly flows in the battery water loop 20. The battery water loop 20 takes away the heat generated by the battery 21 at work by means of water circulation, so as to cool the battery 21; or, when an ambient temperature is relatively low, the battery water loop 20 releases heat to the battery 21 by means of water circulation, so as to realize the thermal insulation of the battery 21, therefore it is ensured that the battery 21 works normally at a low temperature, or the endurance of the battery 21 is improved. The battery water loop 20 includes a plurality of battery water sub-loops 23, there can two, three or more battery water sub-loops 23, and the greater the number of the battery water sub-loops 23 is, the more optional thermal management modes the battery water loop 20 has. Since the battery water loop 20 includes the plurality of battery water sub-loops 23, the battery water loop 20 has a plurality of optional thermal management modes, so as to select a corresponding mode according to requirements to realize refined management of the heat of the vehicle, thereby reducing the energy consumption of the vehicle. One of the battery water sub-loops 23 is in communication with the battery cooler 13, so that the refrigerant loop 10 exchanges heat with the battery water loop 20, so as to absorb the heat in the battery water loop 20.

The motor water loop 30 includes a motor 31 and a motor water pump 32, as shown in Fig. 1. The motor water loop 30 is used for adjusting a temperature of the motor 31, so as to realize the cooling or thermal insulation of the motor 31. The motor water pump 32 pressurizes the water at work, so that the water circularly flows in the motor water loop 30. The motor water loop 30 includes a plurality of motor water sub-loops 34, there can two, three or more motor water sub-loops 34, and the greater the number of the motor water sub-loops 34 is, the more optional thermal management modes the motor water loop 30 has. Since the motor water loop 30 includes the plurality of motor water sub-loops 34, the motor water loop 30 has a plurality of optional thermal management modes, so as to select a corresponding mode according to requirements to realize refined management of the heat of the vehicle, thereby reducing the energy consumption of the vehicle. The passenger compartment water loop 40 is used for heating of the passenger compartment, and the passenger compartment water loop 40 is in communication with the first heat exchanger 12, so that the refrigerant loop 10 exchanges heat with the passenger compartment water loop 40, so as to release heat to the passenger compartment water loop 40.

The control valve module is configured to control each of the plurality of battery water sub-loops 23 and each of the plurality of motor water sub-loops 34 to selectively communicate with the passenger compartment water loop 40, so that heat exchange is selectively performed among each of the plurality of refrigerant sub-loops 19, each of the plurality of battery water sub-loops 23, each of the plurality of motor water sub-loops 34 and the passenger compartment water loop 40.

Referring to Fig. 1, the first control valve assembly 50 is connected between each of the plurality of battery water sub-loops 23 and the passenger compartment water loop 40, and the second control valve assembly 60 is connected between each of the plurality of battery water sub-loops 23 and each of the plurality of motor water sub-loops 34, wherein the first control valve assembly 50 is configured to control each of the plurality of battery water sub-loops 23 to selectively communicate with the passenger compartment water loop 40, and the second control valve assembly 60 is configured to control each of the plurality of battery water sub-loops 23 to selectively communicate with each of the plurality of motor water sub-loops 34, so that heat exchange is selectively performed among each of the plurality of refrigerant sub-loops 19, each of the plurality of battery water sub-loops 23, each of the plurality of motor water sub-loops 34 and the passenger compartment water loop 40. For example, the second control valve assembly 60 controls one of the plurality of battery water sub-loops 23 to communicate with one of the plurality of motor water sub-loops 34, so that the battery water sub-loop 23 and the motor water sub-loop 34 form a series loop; and the first control valve assembly 50 controls the battery water sub-loop 23 in communication with the battery cooler 13 to be turned on, so that the refrigerant loop 10 absorbs the heat in the battery water sub-loop 23 and the motor water sub-loop 34, and transfer the heat to the passenger compartment water loop 40 by the first heat exchanger 12 in the refrigerant loop 10. In the above heat exchange mode, the heat dissipated by the motor 31 and the battery 21 at work is used for the heating of the passenger compartment, thereby realizing comprehensive management of the heat, and the power consumption of the compressor 11 during the heating of the passenger compartment is reduced, thereby reducing the energy consumption of the vehicle. As another example, the motor water loop 30 is provided with a motor water sub-loop 34 for dissipating heat outside, and the second control valve assembly 60 controls one of the battery water sub-loops 23 to communicate with the motor water sub-loop 34 for dissipating heat outside, so that the battery water sub-loop 23 and the motor water sub-loop 34 form a series loop, at this time, the battery 21 can dissipate heat to the outside by means of the motor water sub-loop 34, thereby realizing comprehensive management of the heat; and the heat dissipation of the battery 21 does not require the compressor 11 to work, so that the power consumption of the compressor 11 during the heat dissipation of the battery 21 is reduced, thereby reducing the energy consumption of the vehicle.

According to the thermal management system 100 provided in the present invention, first, the refrigerant loop 10 includes the plurality of refrigerant sub-loops 19, the battery water loop 20 includes the plurality of battery water sub-loops 23, the motor water loop 30 includes the plurality of motor water sub-loops 34, so that the refrigerant loop 10, the battery water loop 20 and the motor water loop 30 each has a plurality of optional thermal management modes, so as to select a corresponding mode according to requirements to realize refined management of the heat of the vehicle, thereby reducing the energy consumption of the vehicle; and second, the first control valve assembly 50 can control each of the plurality of battery water sub-loops 23 to selectively communicate with the passenger compartment water loop 40, and the second control valve assembly 60 can control each of the plurality of battery water sub-loops 23 to selectively communicate with each of the plurality of motor water sub-loops 34, so that heat exchange is selectively performed among each refrigerant sub-loop 19, each of the plurality of battery water sub-loops 23, each of the plurality of motor water sub-loops 34 and the passenger compartment water loop 40, so as to couple the battery water loop 20, the motor water loop 30 and the passenger compartment water loop 40, thereby realizing comprehensive management of the heat of a plurality of modules, thus further reducing the energy consumption of the vehicle and improving the endurance of the vehicle.

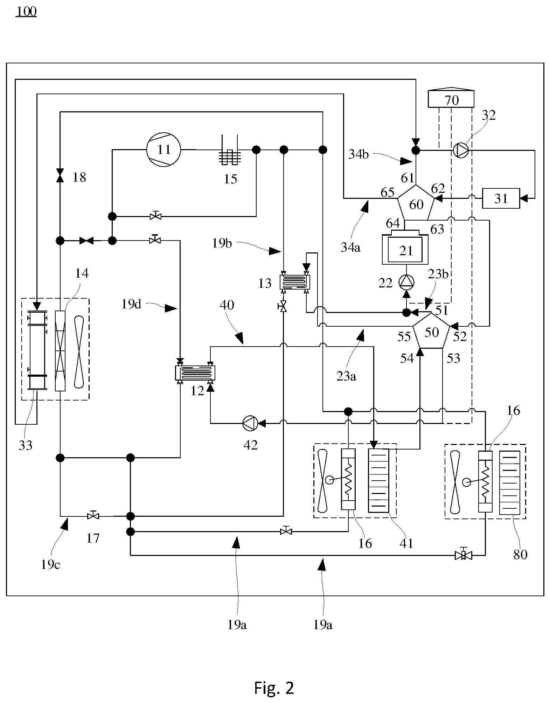

In one embodiment, as shown in Fig. 2, the refrigerant loop 10 includes at least four refrigerant sub-loops 19, the battery water loop 20 includes two battery water sub-loops 23, and the motor water loop 30 includes two motor water sub-loops 34. In this way, the number of the refrigerant sub-loops 19, the number of the battery water sub-loops 23 and the number of the motor water sub-loop 34 are suitable. On one hand, the number of the refrigerant sub-loops 19, the number of the battery water sub-loops 23 and the number of the motor water sub-loop 34 are not too small, so that the refrigerant loop 10, the battery water loop 20 and the motor water loop 30 each has certain optional thermal management modes, so as to select a corresponding mode according to requirements to realize refined management of the heat of the vehicle, thereby reducing the energy consumption of the vehicle; and on the other hand, the number of the refrigerant sub-loops 19, the number of the battery water sub-loops 23 and the number of the motor water sub-loop 34 are not too large, thereby being conducive to reducing the complexity of the water loops.

Referring to Fig. 2, in one embodiment, the battery 21, the battery water pump 22, the first control valve assembly 50, the second control valve assembly 60 and the battery cooler 13 are in communication with each other to form a first battery water sub-loop 23a. The communication between the battery 21 and other components means that a pipeline disposed in the battery 21 is in communication with pipelines of the other components. The first battery water sub-loop 23a can exchange heat with the refrigerant sub-loop 19 by the battery cooler 13, so as to couple the battery water loop 20 and the motor water loop 30 with the refrigerant loop 10 to realize comprehensive management of the heat of a plurality of modules. The battery 21, the battery water pump 22, the first control valve assembly 50 and the second control valve assembly 60 are in communication with each other to form a second battery water sub-loop 23b. The first control valve assembly 50 and the second control valve assembly 60 are connected in the second battery water sub-loop 23b, since the first control valve assembly 50 is connected between each of the plurality of battery water sub-loops 23 and the passenger compartment water loop 40, and the second control valve assembly 60 is connected between each of the plurality of battery water sub-loops 23 and each of the plurality of motor water sub-loops 34, the second battery water sub-loop 23b is coupled to the battery water loop 20, the motor water loop 30 and the passenger compartment water loop 40, so as to realize comprehensive management of the heat of a plurality of modules.

Referring to Fig. 2, in one embodiment, the motor water loop 30 includes a motor 31, a motor water pump 32 and a radiator 33. The motor 31, the motor water pump 32, the second control valve assembly 60 and the radiator 33 are in communication with each other to form a first motor water sub-loop 34a, and the radiator 33 is used for dissipating the heat in the first motor water sub-loop 34a to air. The communication between the motor 31 and other components means that a pipeline disposed in the motor 31 is in communication with pipelines of the other components. The first motor water sub-loop 34a can exchange heat with the air by the radiator 33, and dissipate heat generated by the motor 31 at work to the air, thereby cooling the motor 31, and since the heat dissipation of the motor 31 does not require the compressor 11 to work, the power consumption of the compressor 11 during the heat dissipation of the motor 31 is reduced, thereby reducing the energy consumption of the vehicle. The motor 31, the motor water pump 32 and the second control valve assembly 60 are in communication with each other to form a second motor water sub-loop 34b, and the second motor water sub-loop 34b is used for the thermal insulation of the motor 31. For example, the second control valve assembly 60 controls the second motor water sub-loop 34b to communicate with the second battery water sub-loop 23b, the first control valve assembly 50 controls the second battery water sub-loop 23b to communicate with the passenger compartment water loop 40, and the passenger compartment water loop 40 is in communication with the first heat exchanger 12, so that the refrigerant loop 10 simultaneously releases heat to the passenger compartment, the battery 21 and the motor 31 by the first heat exchanger 12, thereby realizing the thermal insulation of the motor 31 and the battery 21.

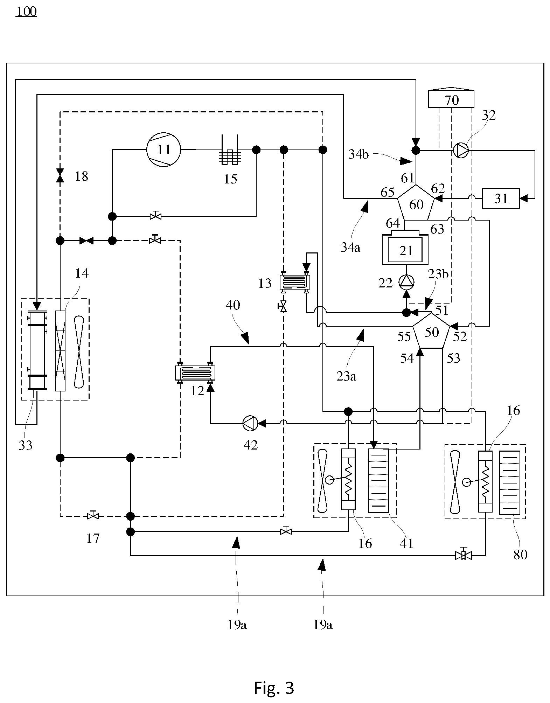

In one embodiment, as shown in Fig. 3, the refrigerant loop 10 further includes a second heat exchanger 14, a gas-liquid separator 15 and at least one evaporator 16. The second heat exchanger 14 is used for exchanging heat with the air, for example, in a refrigeration working condition, the second heat exchanger 14 can release heat to the air; and as another example, in a heating working condition, the second heat exchanger 14 can absorb the heat in the air. The gas-liquid separator 15 is used for separating a liquid refrigerant from a gas refrigerant, so as to separate liquid from a gas, so that the liquid is prevented from entering the compressor 11 to generate a liquid impact phenomenon, thereby ensuring the normal operation of the compressor 11, and preventing overload operation or damage thereof. Each of the at least one evaporator 16 is disposed in the passenger compartment, the evaporator 16 is used for the refrigeration of the passenger compartment, and there are one or two evaporators 16. The second heat exchanger 14, the compressor 11 and the gas-liquid separator 15 are respectively in communication with each of the one or two evaporators 16 to form at least one first refrigerant sub-loop 19a, and each of the at least one first refrigerant sub-loop 19a is used for the refrigeration of the passenger compartment.

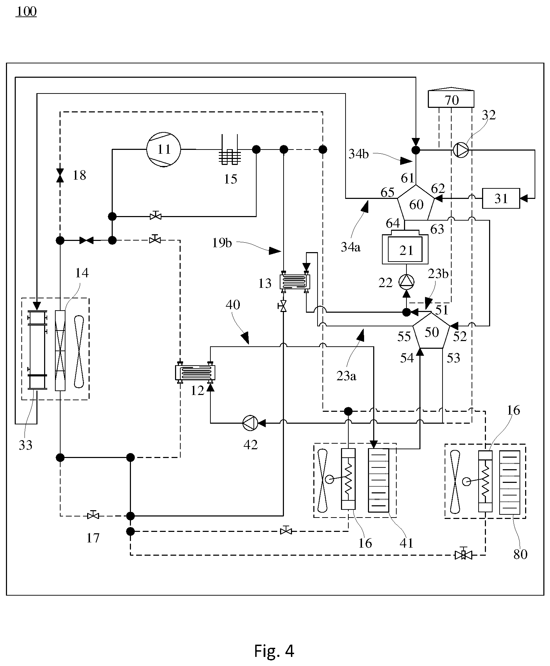

Referring to Fig. 4, the second heat exchanger 14, the compressor 11, the gas-liquid separator 15 and the battery cooler 13 are in communication with each other to form a second refrigerant sub-loop 19b, the second refrigerant sub-loop 19b absorbs the heat in the first battery water sub-loop 23a by the battery cooler 13, the second refrigerant sub-loop 19b is used for cooling the battery 21, when the first battery water sub-loop 23a is in communication with the second motor water sub-loop 34b, the second refrigerant sub-loop 19b can also absorb the heat in the first battery water sub-loop 23a and the second motor water sub-loop 34b by the battery cooler 13, and at this time, the second refrigerant sub-loop 19b is used for cooling the battery 21 and the motor 31.

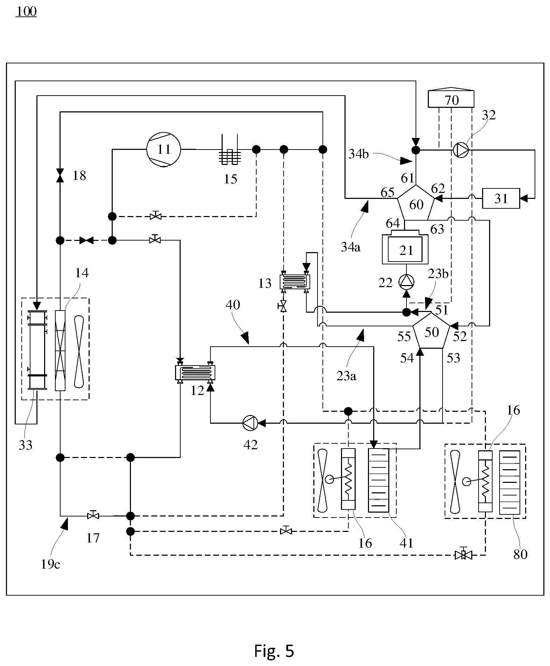

Referring to Fig. 5, the second heat exchanger 14, the compressor 11, the gas-liquid separator 15 and the first heat exchanger 12 are in communication with each other to form a third refrigerant sub-loop 19c, the third refrigerant sub-loop 19c releases heat to the passenger compartment water loop 40 by the first heat exchanger 12, the third refrigerant sub-loop 19c is used for the heating of the passenger compartment, at this time, the heat is from the heat absorbed by the second heat exchanger 14 from the air, and when the second battery water sub-loop 23b and the second motor water sub-loop 34b are in communication with the passenger compartment water loop 40, the third refrigerant sub-loop 19c can also release heat to the passenger compartment water loop 40, the second battery water sub-loop 23b and the second motor water sub-loop 34b by the first heat exchanger 12, thereby realizing the thermal insulation of the battery 21 and the motor 31.

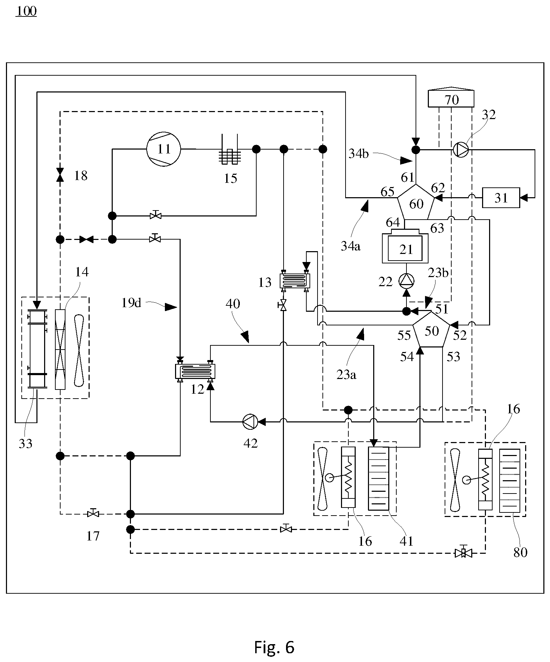

Referring to Fig. 6, the first heat exchanger 12, the compressor 11, the gas-liquid separator 15 and the battery cooler 13 are in communication with each other to form a fourth refrigerant sub-loop 19d, the fourth refrigerant sub-loop 19d absorbs the heat in the first battery water sub-loop 23a and the second motor water sub-loop 34b by the battery cooler 13, and the fourth refrigerant sub-loop 19d releases heat to the passenger compartment water loop by the first heat exchanger 12. In this way, the fourth refrigerant sub-loop 19d can cool the motor 31 and the battery 21, and use the heat dissipated by the motor 31 and the battery 21 at work for heating of the passenger compartment, thereby realizing comprehensive management of the heat, so that the power consumption of the compressor 11 during the heating of the passenger compartment is reduced, thus reducing the energy consumption of the vehicle.

The first control valve assembly 50 can include several one-way water valves, three-way water valves or four-way water valves. Or, as shown in Fig. 2, the first control valve assembly 50 includes a five-way water valve, the first control valve assembly 50 has a first control valve first end 51, a first control valve second end 52, a first control valve third end 53, a first control valve fourth end 54 and a first control valve fifth end 55, wherein a water inlet end and a water outlet end of the first battery water sub-loop 23a are respectively connected with the first control valve second end 52 and the first control valve fifth end 55 of the first control valve assembly 50, a water inlet end and a water outlet end of the second battery water sub-loop 23b are respectively connected with the first control valve second end 52 and the first control valve first end 51 of the first control valve assembly 50, and a water inlet end and a water outlet end of the passenger compartment water loop 40 are respectively connected with the first control valve fourth end 54 and the first control valve third end 53 of the first control valve assembly 50. Since the first control valve assembly 50 includes the five-way water valve, and the five-way water valve has five ports, so that connection requirements of the battery water sub-loops 23 and the passenger compartment water loop 40 are met, the number of control valves is reduced, and the structure of the thermal management system 100 is simplified. In addition, one water inlet end of the first battery water sub-loop 23a and one water inlet end of the second battery water sub-loop 23b share the first control valve second end 52, thereby realizing combined setting of some pipelines, and thus the disposition of the pipelines is simplified.

The second control valve assembly 60 can include several one-way water valves, three-way water valves or four-way water valves. Or, as shown in Fig. 2, the second control valve assembly 60 includes a five-way water valve, and the second control valve assembly 60 has a second control valve first end 61, a second control valve second end 62, a second control valve third end 63, a second control valve fourth end 64 and a second control valve fifth end 65, wherein an other water inlet end and an other water outlet end of the first battery water sub-loop 23a are respectively connected with the second control valve fourth end 64 and the second control valve third end 63 of the second control valve assembly 60, an other water inlet end and an other water outlet end of the second battery water sub-loop 23b are also respectively connected with the second control valve fourth end 64 and the second control valve third end 63 of the second control valve assembly 60, a water inlet end and a water outlet end of the first motor water sub-loop 34a are respectively connected with the second control valve second end 62 and the second control valve fifth end 65 of the second control valve assembly 60, and a water inlet end and a water outlet end of the second motor water sub-loop 34b are respectively connected with the second control valve second end 62 and the second control valve first end 61 of the second control valve assembly 60. Since the second control valve assembly 60 includes the five-way water valve, and the five-way water valve has five ports, so that the connection requirements of the battery water sub-loops 23 and the motor water sub-loops are met, the number of control valves is reduced, and the structure of the thermal management system 100 is simplified. In addition, the other water inlet end of the first battery water sub-loop 23a and the other water inlet end of the second battery water sub-loop 23b share the second control valve fourth end 64, the other water outlet end of the first battery water sub-loop 23a and the other water outlet end of the second battery water sub-loop 23b share the second control valve third end 63, and the water inlet end of the first motor water sub-loop 34a and the water inlet end of the second motor water sub-loop 34b share the second control valve second end 62, thereby realizing combined setting of some pipelines, and thus the disposition of the pipelines is simplified.

Referring to Fig. 2, in one embodiment, the thermal management system 100 includes an expansion kettle 70, and the battery water loop 20, the motor water loop 30 and the passenger compartment water loop 40 are all in communication with the expansion kettle 70. The expansion kettle 70 is used for storing water and adjusting the pressure in the water loops. When the water circulates in the water loops, the water is heated to expand, and excess water can flow into the expansion kettle 70, thereby preventing an excessively high pressure in the water loops. A space is reserved inside the expansion kettle 70 to accommodate the air, and when the pressure in the water loops is too high, a part of air is discharged, thereby ensuring the stable operation of the water loops.

The refrigerant loop 10 further includes electronic expansion valves 17 and electromagnetic valves 18. The number of the electronic expansion valves 17 and the number of the electromagnetic valves 18 is set as needed. The electronic expansion valve 17 is used for controlling the flow rate and pressure of a refrigerant in each of the plurality of refrigerant sub-loops 19, and the electronic expansion valve 17 can adjust the flow rate of the refrigerant by an electrical signal, thereby realizing accurate temperature adjustment and pressure control. With respect to a thermostatic expansion valve, the electronic expansion valve 17 has a higher reaction speed and a wider adjustment range, and thus can better adapt to the requirements of the thermal management system 100. The electromagnetic valve 18 is used for controlling the on/off of each of the plurality of refrigerant sub-loops 19 or changing a flow direction of the refrigerant in each of the plurality of refrigerant sub-loops 19, so as to selectively control each of the plurality of refrigerant sub-loops 19 to be in a working state. The electromagnetic valve 18 is controlled by an electrical signal and is conveniently connected with a controller. In addition, the electromagnetic valve 18 also has the advantages of high response speed, low power consumption, small overall dimension, etc.

As described above, there are one or two evaporators 16. In one embodiment, as shown in Fig. 2, there are two evaporators 16, the two evaporators 16 are respectively disposed in a front-row area and a rear-row area of the passenger compartment, the second heat exchanger 14, the compressor 11 and the gas-liquid separator 15 are respectively in communication with the two evaporators 16 to form two first refrigerant sub-loops 19a, and the two first refrigerant sub-loops 19a are respectively used for refrigeration of the front-row area and the rear-row area of the passenger compartment. Since the two evaporators 16 are respectively located in the front-row area and the rear-row area of the passenger compartment, partition refrigeration of the passenger compartment is realized, thereby facilitating the refined management of the heat in the passenger compartment, and thus reducing the energy consumption of the vehicle.

In one embodiment, as shown in Fig. 2, the passenger compartment water loop 40 includes a warm air core body 41 and a heating water pump 42, the warm air core body 41 is disposed in the passenger compartment, the warm air core body 41, the heating water pump 42 and the first heat exchanger 12 are in communication with each other to form the passenger compartment water loop 40, and the warm air core body 41 is used for the heating of the passenger compartment.

In one embodiment, as shown in Fig. 2, the warm air core body 41 is disposed in the front-row area of the passenger compartment, the thermal management system 100 further includes a heater 80, the heater 80 is disposed in the rear-row area of the passenger compartment, and both the warm air core body 41 and the heater 80 are used for the heating of the passenger compartment. Since the warm air core body 41 and the heater 80 are respectively located in the front-row area and the rear-row area of the passenger compartment, partition refrigeration of the passenger compartment is realized, thereby facilitating the refined management of the heat in the passenger compartment, and thus reducing the energy consumption of the vehicle.

According to the thermal management system 100 provided in the present invention, the first control valve assembly 50 can control each of the plurality of battery water sub-loops 23 to selectively communicate with the passenger compartment water loop 40, and the second control valve assembly 60 controls each of the plurality of battery water sub-loops 23 to selectively communicate with each of the plurality of motor water sub-loops 34, so that a corresponding thermal management mode is realized by changing the communication mode of the water loop. Some exemplary thermal management modes are described below.

Referring to Fig. 3 and Fig. 6, in one embodiment, the first control valve third end 53 and the first control valve fourth end 54 of the first control valve assembly 50 are communicated, and the first control valve first end 51 and the first control valve second end 52 of the first control valve assembly 50 are communicated; and the second control valve second end 62 and the second control valve third end 63 of the second control valve assembly 60 are communicated, and the second control valve fourth end 64 and the second control valve fifth end 65 of the second control valve assembly 60 are communicated. In the above thermal management mode, the passenger compartment water loop 40 is communicated, and the passenger compartment can independently perform heating or cooling; and the second battery water sub-loop 23b is coupled in series with the first motor water sub-loop 34a, and the battery 21 and the motor 31 dissipate heat by the radiator 33.

Referring to Fig. 3 and Fig. 6, in one embodiment, the first control valve third end 53 and the first control valve fourth end 54 of the first control valve assembly 50 are communicated, and the first control valve first end 51 and the first control valve second end 52 of the first control valve assembly 50 are communicated; and the second control valve third end 63 and the second control valve fourth end 64 of the second control valve assembly 60 are communicated, and the second control valve second end 62 and the second control valve fifth end 65 of the second control valve assembly 60 are communicated. In the above thermal management mode, the passenger compartment water loop 40 is communicated, and the passenger compartment can independently perform heating or cooling; the second battery water sub-loop 23b is communicated, and the battery 21 performs heat dissipation by water circulation; and the first motor water sub-loop 34a is communicated, the motor 31 dissipates heat by the radiator 33, and at this time, the three water paths are relatively independent of each other.

Referring to Fig. 3 and Fig. 4, in one embodiment, the first control valve third end 53 and the first control valve fourth end 54 of the first control valve assembly 50 are communicated, and the first control valve second end 52 and the first control valve fifth end 55 of the first control valve assembly 50 are communicated; and the second control valve third end 63 and the second control valve fourth end 64 of the second control valve assembly 60 are communicated, and the second control valve second end 62 and the second control valve fifth end 65 of the second control valve assembly 60 are communicated. In the above thermal management mode, the passenger compartment water loop 40 is communicated, and the passenger compartment can independently perform heating or cooling; the first battery water sub-loop 23a is communicated, and the battery 21 dissipates heat by the second refrigerant sub-loop 19b; and the first motor water sub-loop 34a is communicated, and the motor 31 dissipates heat by the radiator 33.

Referring to Fig. 3 and Fig. 6, in one embodiment, the first control valve third end 53 and the first control valve fourth end 54 of the first control valve assembly 50 are communicated, and the first control valve first end 51 and the first control valve second end 52 of the first control valve assembly 50 are communicated; and the second control valve first end 61 and the second control valve fourth end 64 of the second control valve assembly 60 are communicated, and the second control valve second end 62 and the second control valve third end 63 of the second control valve assembly 60 are communicated. In the above thermal management mode, the passenger compartment water loop 40 is communicated, and the passenger compartment can independently perform heating or cooling; and the second battery water sub-loop 23b is coupled in series with the second motor water sub-loop 34b, and the battery 21 and the motor 31 perform thermal insulation by water circulation.

Referring to Fig. 6, in one embodiment, the first control valve second end 52 and the first control valve third end 53 of the first control valve assembly 50 are communicated, and the first control valve first end 51 and the first control valve fourth end 54 of the first control valve assembly 50 are communicated; and the second control valve third end 63 and the second control valve fourth end 64 of the second control valve assembly 60 are communicated, and the second control valve second end 62 and the second control valve fifth end 65 of the second control valve assembly 60 are communicated. In the above thermal management mode, the passenger compartment water loop 40 is connected in series with the second battery water sub-loop 23b, and since the passenger compartment water loop 40 is in communication with the first heat exchanger 12 in the third refrigerant sub-loop 19c, the fourth refrigerant sub-loop 19d can release heat to the passenger compartment water loop 40 and the second battery water sub-loop 23b, and at this time, the compressor 11 is used for the heating of the passenger compartment and the thermal insulation of the battery 21; and the first motor water sub-loop 34a is communicated, and the motor 31 dissipates heat by the radiator 33.

Referring to Fig. 6, in one embodiment, the first control valve second end 52 and the first control valve third end 53 of the first control valve assembly 50 are communicated, and the first control valve first end 51 and the first control valve fourth end 54 of the first control valve assembly 50 are communicated; and the second control valve first end 61 and the second control valve fourth end 64 of the second control valve assembly 60 are communicated, and the second control valve second end 62 and the second control valve third end 63 of the second control valve assembly 60 are communicated. In the above thermal management mode, the passenger compartment water loop 40 is coupled in series with the second battery water sub-loop 23b and the second motor water sub-loop 34b, since the passenger compartment water loop 40 is in communication with the first heat exchanger 12 in the third refrigerant sub-loop 19c, the fourth refrigerant sub-loop 19d can release heat to the passenger compartment water loop 40 and the second battery water sub-loop 23b, meanwhile the heat of the motor 31 is released to the second battery water sub-loop 23b, and at this time, the heat released from the compressor 11 and the motor 31 simultaneously heats the battery 21.

Referring to Fig. 6, in one embodiment, the first control valve third end 53 and the first control valve fourth end 54 of the first control valve assembly 50 are communicated, and the first control valve second end 52 and the first control valve fifth end 55 of the first control valve assembly 50 are communicated; and the second control valve first end 61 and the second control valve fourth end 64 of the second control valve assembly 60 are communicated, and the second end 62 and the second control valve third end 63 of the second control valve second control valve assembly 60 are communicated. In the above thermal management mode, the first battery water sub-loop 23a is coupled in series with the second motor water sub-loop 34b, the fourth refrigerant sub-loop 19d can absorb the heat in the first battery water sub-loop 23a and the second motor water sub-loop 34b by the battery cooler 13, and the fourth refrigerant sub-loop 19d can release heat to the passenger compartment water loop by the first heat exchanger 12, so that the fourth refrigerant sub-loop 19d can cool the motor 31 and the battery 21; and the heat dissipated by the motor 31 and the battery 21 at work is used for the heating of the passenger compartment, thereby realizing comprehensive management of the heat, thereby reducing the power consumption of the compressor 11 during the heating of the passenger compartment, and thus reducing the energy consumption of the vehicle.

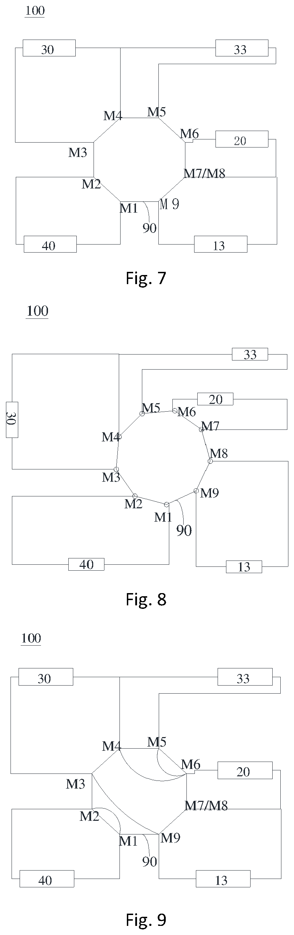

The present invention further provides a thermal management system 100. Referring to Fig. 7 and Fig. 8, the thermal management system 100 includes a control valve module, a passenger compartment water loop 40, a radiator 33, a motor water loop 30, a battery water loop 20 and a battery cooler 13, wherein the control valve module includes a multi-way valve 90.

The multi-way valve 90 includes a valve body and a valve core, the valve body is provided with a plurality of valve ports disposed in a circumferential direction of the valve core, and the multi-way valve 90 has a first valve port M1, a second valve port M2, a third valve port M3, a fourth valve port M4, a fifth valve port M5, a sixth valve port M6, a seventh valve port M7, an eighth valve port M8 and a ninth valve port M9. An end of the passenger compartment water loop 40 is in communication with the first valve port M1, an other end of the passenger compartment water loop 40 is in communication with the second valve port M2, an end of the motor water loop 30 is in communication with the third valve port M3, an other end of the motor water loop 30 is in communication with the fourth valve port M4, an end of the radiator 33 is in communication with the fourth valve port M4, an other end of the radiator 33 is in communication with the fifth valve port M5, an end of the battery water loop 20 is in communication with the sixth valve port M6, an other end of the battery water loop 20 is in communication with the seventh valve port M7, an end of the battery cooler 13 is in communication with the eighth valve port M8, and an other end of the battery cooler 13 is in communication with the ninth valve port M9, wherein the seventh valve port M7 and the eighth valve port M8 are a same valve port, or the seventh valve port M7 and the eighth valve port M8 are different valve ports.

Specifically, the multi-way valve 90 is provided with a plurality of valve ports, the plurality of valve ports are disposed in the circumferential direction of the valve core, and different valve ports are communicated inside the valve core, and are also communicated outside the valve body by functional modules such as the passenger compartment water loop 40 and the motor water loop 30; the first valve port M1 to the ninth valve port M9 are disposed clockwise in the circumferential direction of the valve core, and can also be disposed anticlockwise or disposed in an irregular order, and when the valve core rotates to a different angle, the thermal management system 100 is in a corresponding working mode, and at least one of the passenger compartment water loop 40, the motor water loop 30, the radiator 33, the battery water loop 20 and the battery cooler 13 work. The plurality of valve ports of the multi-way valve 90 are respectively in communication with corresponding ends of the passenger compartment water loop 40, the motor water loop 30, the radiator 33, the battery water loop 20 and the battery cooler 13. Compared with the foregoing technical solution in which the plurality of five-way valves are in communication with the loop, on one hand, the number of the valve ports is reduced, the number of valves per se is reduced, the number of components of the thermal management system 100 is reduced, and meanwhile a switching function of the plurality of working modes is integrated; on the other hand, the multi-way valve 90 highly couples the heat of the battery water loop 20, the motor water loop 30 and the passenger compartment water loop 40, so that the waste heat of the battery water loop 20 and the motor water loop 30 heats the passenger compartment water loop 40, thereby realizing heat reuse, improving the energy efficiency, reducing the energy consumption, and improving the energy conservation of the thermal management system 100.

In the present invention, it is taken as an example for illustration that the first valve port M1 to the ninth valve port M9 are disposed clockwise.

Referring to Fig. 7, the multi-way valve 90 in the present embodiment is an eight-way valve, wherein the seventh valve port M7 and the eighth valve port M8 are the same valve port.

Specifically, the multi-way valve 90 has eight valve ports, the seventh valve port M7 and the eighth valve port M8 are the same valve port, for ease of description, both the seventh valve port M7 and the eighth valve port M8 is referred to as the seventh valve port M7, and the eight-way valve has a plurality of working modes as follows.

Referring to Fig. 9, in the first working mode, the first valve port M1 inside the valve body is in communication with the second valve port M2, so that the passenger compartment water loop 40 works; and meanwhile, the third valve port M3 inside the valve body is in communication with the ninth valve port M9, the fourth valve port M4 is in communication with the sixth valve port M6, and the fifth valve port M5 is also in communication with the sixth valve port M6, so that the radiator 33, the motor water loop 30, the battery water loop 20 and the battery cooler 13 are all in the working state, and the heat of the motor water loop 30 and the heat of the battery water loop 20 is used for heating the passenger compartment water loop 40.

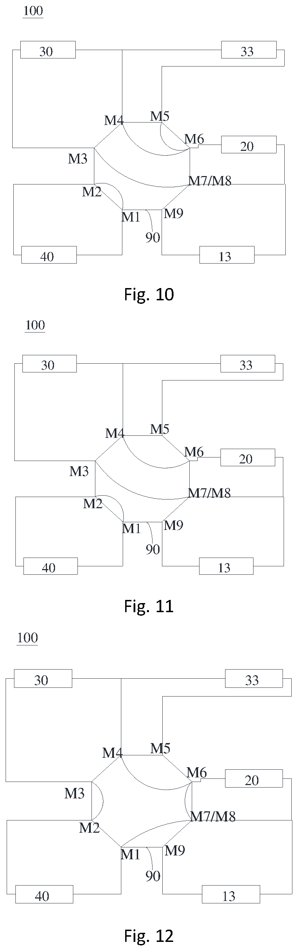

Referring to Fig. 10, in the second working mode, the first valve port M1 inside the valve body is in communication with the second valve port M2, so that the passenger compartment water loop 40 works; and meanwhile, the third valve port M3 inside the valve body is in communication with the seventh valve port M7, the fourth valve port M4 is in communication with the sixth valve port M6, and the fifth valve port M5 is also in communication with the sixth valve port M6, so that the radiator 33, the motor water loop 30 and the battery water loop 20 are all in the working state, so as to realize the heating of the heating water pump 42 in the passenger compartment water loop 40 and the heat dissipation of the battery water loop 20.

Referring to Fig. 11, in the third working mode, the first valve port M1 inside the valve body is in communication with the second valve port M2, so that the passenger compartment water loop 40 works; and meanwhile, the third valve port M3 inside the valve body is in communication with the seventh valve port M7, and the fourth valve port M4 is in communication with the sixth valve port M6, so that the motor water loop 30 and the battery water loop 20 are both in the working state, so as to realize the heating of the heating water pump 42 in the passenger compartment water loop 40, and motor stalling heating.

Referring to Fig. 12, in the fourth working mode, the first valve port M1 inside the valve body is in communication with the seventh valve port M7, the second valve port M2 is in communication with the third valve port M3, the fourth valve port M4 is in communication with the sixth valve port M6, and the sixth valve port M6 is in communication with the seventh valve port M7, so that the passenger compartment water loop 40, the motor water loop 30 and the battery water loop 20 are in the working state.

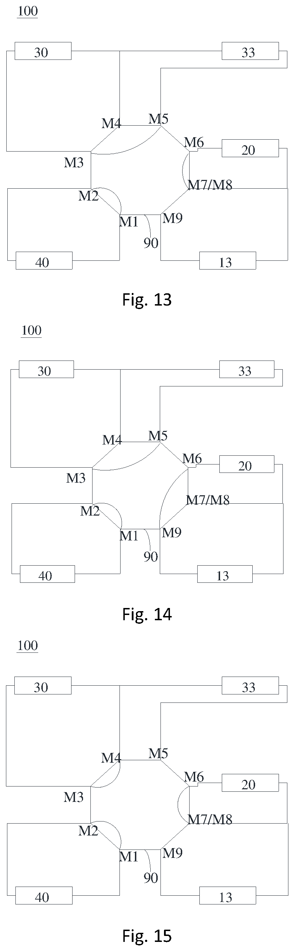

Referring to Fig. 13, in the fifth working mode, the first valve port M1 inside the valve body is in communication with the second valve port M2, so that the passenger compartment water loop 40 works; the third valve port M3 is in communication with the fifth valve port M5, so that the motor water loop 30 and the radiator 33 work; and the sixth valve port M6 is in communication with the seventh valve port M7, so that the battery water loop 20 works to realize the heating of the heating water pump 42 in the passenger compartment water loop 40, the self-circulation of the battery water loop 20 and the cooling of the motor 31 in the motor water loop 30.

Referring to Fig. 14, in the sixth working mode, the first valve port M1 inside the valve body is in communication with the second valve port M2, so that the passenger compartment water loop 40 works; the third valve port M3 is in communication with the fifth valve port M5, so that the motor water loop 30 and the radiator 33 work; and the sixth valve port M6 is in communication with the ninth valve port M 9, so that the battery water loop 20 and the battery cooler 13 work to realize the heating of the heating water pump 42 in the passenger compartment water loop 40, the cooling of the battery water loop 20 by the battery cooler 13, and the cooling of the motor 31 in the motor water loop 30.

Referring to Fig. 15, in the seventh working mode, the first valve port M1 inside the valve body is in communication with the second valve port M2, so that the passenger compartment water loop 40 works; the third valve port M3 is in communication with the fourth valve port M4, so that the motor water loop 30 works; and the sixth valve port M6 is in communication with the seventh valve port M7, so that the battery water loop 20 works to realize the heating of the heating water pump 42 in the passenger compartment water loop 40 and to store the heat generated by the battery in the battery water loop 20.

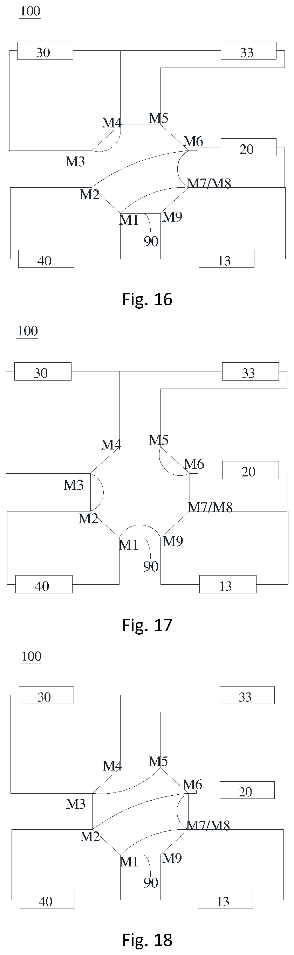

Referring to Fig. 16, in the eighth working mode, the first valve port M1 inside the valve body is in communication with the seventh valve port M7, the second valve port M2 is in communication with the sixth valve port M6, the third valve port M3 is in communication with the fourth valve port M4, and the sixth valve port M6 is in communication with the seventh valve port M7, so that the passenger compartment water loop 40, the motor water loop 30 and the battery water loop 20 are in the working state, so as to realize the heating of the heating water pump 42 in the passenger compartment water loop 40, the heating of an electric heating pump in the battery water loop 20, and the self-circulation of the motor water loop 30.

Referring to Fig. 17, in the ninth working mode, the first valve port M1 inside the valve body is in communication with the ninth valve port M9, the second valve port M2 is in communication with the third valve port M3, and the fifth valve port M5 is in communication with the sixth valve port M6, so that the passenger compartment water loop 40, the radiator 33, the motor water loop 30, the battery water loop 20 and the battery cooler 13 are in the working state, and an anti-freezing solution is injected in the working mode.

Referring to Fig. 18, in the tenth working mode, the first valve port M1 inside the valve body is in communication with the seventh valve port M7, the second valve port M2 is in communication with the sixth valve port M6, the third valve port M3 is in communication with the fifth valve port M5, and the sixth valve port M6 is in communication with the seventh valve port M7, so that the passenger compartment water loop 40, the motor water loop 30, the radiator 33 and the battery water loop 20 are in the working state, so as to realize the heating of the heating water pump 42 in the passenger compartment water loop 40, the heating of the electric heating pump in the battery water loop 20, and the cooling of the motor 31 of the motor water loop 30.

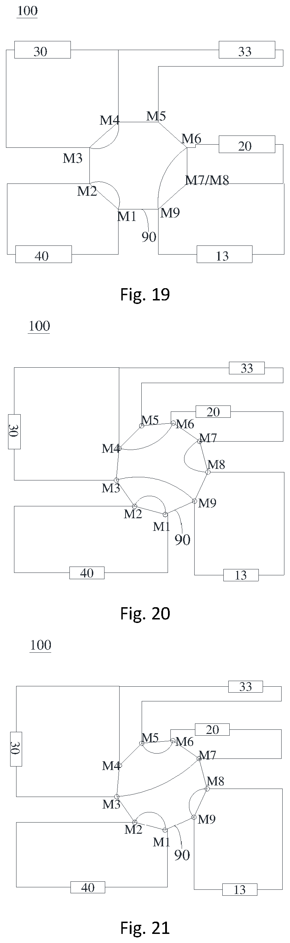

Referring to Fig. 19, in the eleventh working mode, the first valve port M1 inside the valve body is in communication with the second valve port M2, so that the passenger compartment water loop 40 works; the third valve port M3 is in communication with the fourth valve port M4, so that the motor water loop 30 works; and the sixth valve port M6 is in communication with the ninth valve port M9, so that the battery water loop 20 and the battery cooler 13 work to realize the heating of the heating water pump 42 in the passenger compartment water loop 40.

Referring to Fig. 8, the multi-way valve 90 is a nine-way valve, wherein the seventh valve port M7 and the eighth valve port M8 are different valve ports.

Specifically, the multi-way valve 90 has nine valve ports, the seventh valve port M7 and the eighth valve port M8 are different valve ports, and the nine-way valve has a plurality of working modes as follows.

Referring to Fig. 20, in the first working mode, the first valve port M1 inside the valve body is in communication with the second valve port M2, so that the passenger compartment water loop 40 works; and the third valve port M3 inside the valve body is in communication with the ninth valve port M9, the fourth valve port M4 is in communication with the sixth valve port M6, and the seventh valve port M7 is in communication with the eighth valve port M8, so that the motor water loop 30, the radiator 33, the battery water loop 20 and the battery cooler 13 work, so as to realize the heating of the heating water pump 42 in the passenger compartment water loop 40, and meanwhile, the passenger compartment absorbs the heat of the motor water loop 30 and the battery water loop 20.

Referring to Fig. 21, in the second working mode, the first valve port M1 inside the valve body is in communication with the second valve port M2, so that the passenger compartment water loop 40 works; and the third valve port M3 inside the valve body is in communication with the seventh valve port M7, the fifth valve port M5 is in communication with the sixth valve port M6, and the eighth valve port M8 is in communication with the ninth valve port M9, so that the motor water loop 30, the radiator 33, the battery water loop 20 and the battery cooler 13 work, so as to realize the heating of the heating water pump 42 in the passenger compartment water loop 40 and to cool the battery 21 in the battery water loop 20.

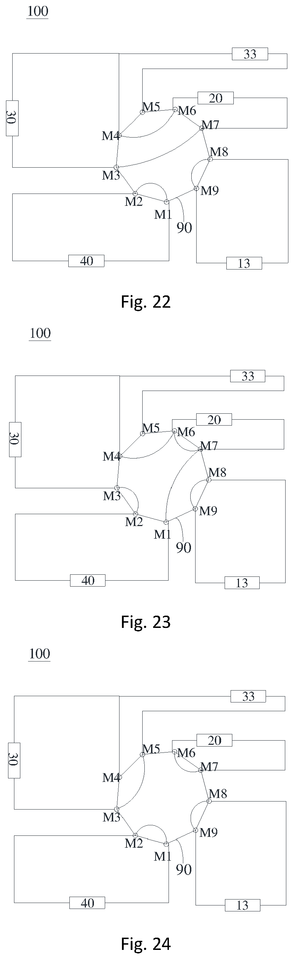

Referring to Fig. 22, in the third working mode, the first valve port M1 inside the valve body is in communication with the second valve port M2, so that the passenger compartment water loop 40 works; and the third valve port M3 inside the valve body is in communication with the seventh valve port M7, the fourth valve port M4 is in communication with the sixth valve port M6, and the eighth valve port M8 is in communication with the ninth valve port M9, so that the motor water loop 30, the battery water loop 20 and the battery cooler 13 work, so as to realize the heating of the heating water pump 42 in the passenger compartment water loop 40, and motor stalling heating.

Referring to Fig. 23, in the fourth working mode, the first valve port M1 of the valve body is in communication with the seventh valve port M7, the second valve port M2 is in communication with the third valve port M3, the fourth valve port M4 is in communication with the sixth valve port M6, the sixth valve port M6 is in communication with the seventh valve port M7, and the eighth valve port M8 is in communication with the ninth valve port M9, so that the passenger compartment water loop 40, the motor water loop 30, the radiator 33, the battery water loop 20 and the battery cooler 13 work.

Referring to Fig. 24, in the fifth working mode, the first valve port M1 of the valve body is in communication with the second valve port M2, the third valve port M3 is in communication with the fifth valve port M5, the sixth valve port M6 is in communication with the seventh valve port M7, and the eighth valve port M8 is in communication with the ninth valve port M9, so that the passenger compartment water loop 40, the motor water loop 30, the radiator 33, the battery water loop 20 and the battery cooler 13 work, so as to realize the heating of the heating water pump 42 in the passenger compartment water loop 40, the self-circulation of the battery water loop 20 and the cooling of the motor water loop 30.

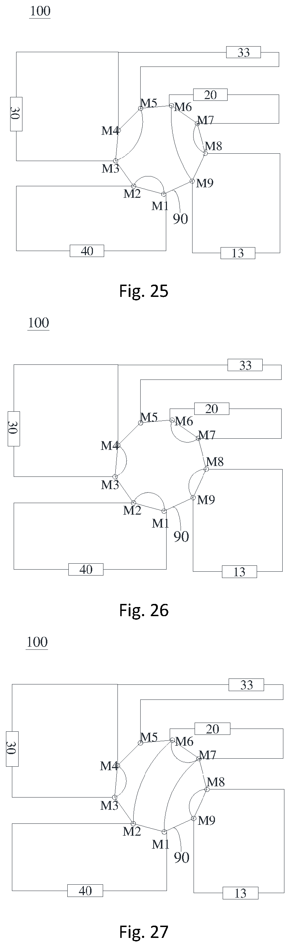

Referring to Fig. 25, in the sixth working mode, the first valve port M1 of the valve body is in communication with the second valve port M2, the third valve port M3 is in communication with the fifth valve port M5, the sixth valve port M6 is in communication with the ninth valve port M9, and the seventh valve port M7 is in communication with the eighth valve port M8, so that the passenger compartment water loop 40, the motor water loop 30, the radiator 33, the battery water loop 20 and the battery cooler 13 work, so as to realize the heating of the heating water pump 42 in the passenger compartment water loop 40, and the battery cooler 13 cools the battery water loop 20 and cools the motor water loop 30.

Referring to Fig. 26, in the seventh working mode, the first valve port M1 of the valve body is in communication with the second valve port M2, the third valve port M3 is in communication with the fourth valve port M4, the sixth valve port M6 is in communication with the seventh valve port M7, and the eighth valve port M8 is in communication with the ninth valve port M9, so that the passenger compartment water loop 40, the motor water loop 30, the battery water loop 20 and the battery cooler 13 work, so as to realize the heating of the heating water pump 42 in the passenger compartment water loop 40, and to store the heat generated by the battery in the battery water loop 20.

Referring to Fig. 27, in the eighth working mode, the first valve port M1 of the valve body is in communication with the seventh valve port M7, the second valve port M2 is in communication with the sixth valve port M6, the third valve port M3 is in communication with the fourth valve port M4, the sixth valve port M6 is in communication with the seventh valve port M7, and the eighth valve port M8 is in communication with the ninth valve port M9, so that the passenger compartment water loop 40, the motor water loop 30, the battery water loop 20 and the battery cooler 13 work, so as to realize the heating of the heating water pump 42 in the passenger compartment water loop 40, the heating of the electric heating pump in the battery water loop 20, and the self-circulation of the motor water loop 30.

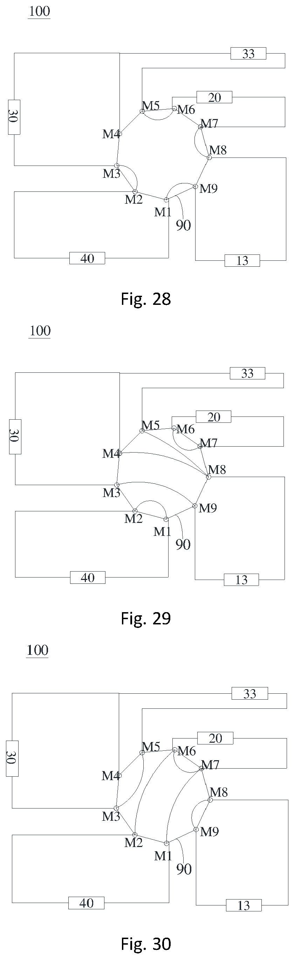

Referring to Fig. 28, in the ninth working mode, the first valve port M1 of the valve body is in communication with the ninth valve port M9, the second valve port M2 is in communication with the third valve port M3, the fifth valve port M5 is in communication with the sixth valve port M6, and the seventh valve port M7 is in communication with the eighth valve port M8, so that the passenger compartment water loop 40, the motor water loop 30, the radiator 33, the battery water loop 20 and the battery cooler 13 work, and the anti-freezing solution is injected in the working mode.

Referring to Fig. 29, in the tenth working mode, the first valve port M1 of the valve body is in communication with the second valve port M2, the third valve port M3 is in communication with the ninth valve port M9, the fourth valve port M4 is in communication with the eighth valve port M8, the fifth valve port M5 is in communication with the eighth valve port M8, and the sixth valve port M6 is in communication with the seventh valve port M7, so that the passenger compartment water loop 40, the motor water loop 30,the radiator 33, the battery water loop 20 and the battery cooler 13 work, so as to realize the heating of the heating water pump 42 in the passenger compartment water loop 40, and meanwhile, the heat generated by the motor water loop 30 heats the passenger compartment water loop 40.

Referring to Fig. 30, in the eleventh working mode, the first valve port M1 of the valve body is in communication with the seventh valve port M7, the second valve port M2 is in communication with the sixth valve port M6, the third valve port M3 is in communication with the fifth valve port M5, the sixth valve port M6 is in communication with the seventh valve port M7, and the eighth valve port M8 is in communication with the ninth valve port M9, so that the passenger compartment water loop 40, the motor water loop 30, the battery water loop 20 and the battery cooler 13 work, so as to realize the heating of the heating water pump 42 in the passenger compartment water loop 40, the heating of the electric heating pump in the battery water loop 20 and the cooling of the motor water loop 30.

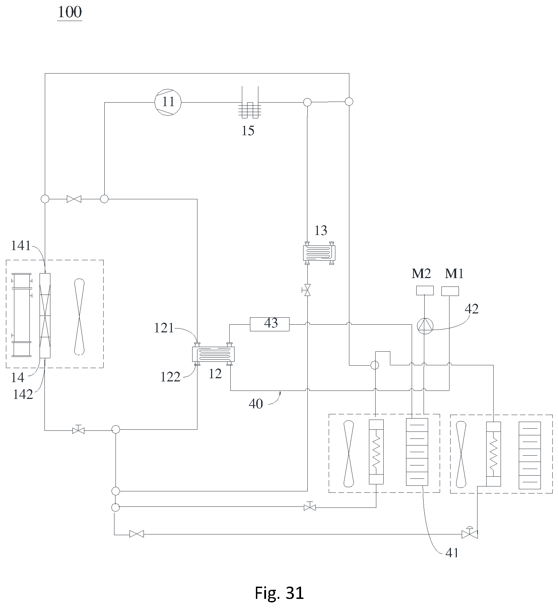

Referring to Fig. 31, the passenger compartment water loop 40 includes a first heat exchanger 12, a warm air core body 41 and a heating water pump 42, which are in communication with each other in sequence, wherein the first heat exchanger 12 is in communication with the first valve port M1, and the heating water pump 42 is in communication with the second valve port M2. The first heat exchanger 12, the warm air core body 41 and the heating water pump 42 are communication with each other in sequence to form the passenger compartment water loop, and the warm air core body 41 is used for the heating of the passenger compartment.

With continued reference to Fig. 31, the passenger compartment water loop 40 further includes a water heater 43, wherein an inlet of the water heater 43 is in communication with the first heat exchanger 12, an outlet of the water heater 43 is in communication with the warm air core body 41, that is, the passenger compartment water loop 40 further includes the water heater 43, the water heater 43, the first heat exchanger 12, the warm air core body 41 and the heating water pump 42 are in communication with each other in sequence to form the passenger compartment water loop, the water heater 43 has a positive temperature coefficient characteristic, the higher the temperature is, the greater the resistance value thereof is, when being powered on, the water heater 43 rapidly heats up and reaches the working temperature thereof, and starts efficient heating, thereby significantly reducing the waiting time of raising the temperature inside the vehicle in winter, and thus improving the comfort of passengers.

In another embodiment, the water heater 43 is used in the motor water loop 30, and is used as a reliable independent or supplemental heat source at the early stage of startup of the motor or when the ambient temperature is extremely low.

With continued reference to Fig. 31, the thermal management system 100 includes a gas-liquid separator 15 and a compressor 11, the first heat exchanger 12, the battery cooler 13, the gas-liquid separator 15 and the compressor 11 are in communication with each other in sequence, and an outlet of the compressor 11 is in communication with a first refrigerant pipe orifice 121 of the first heat exchanger 12.

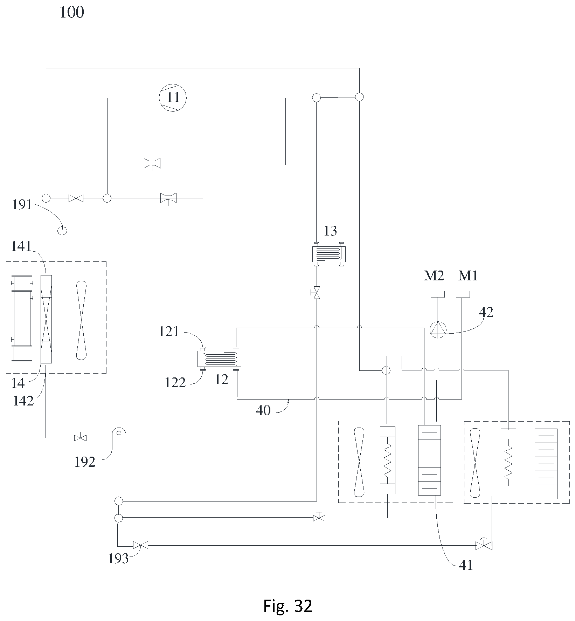

Referring to Fig. 32, the thermal management system 100 further includes a second heat exchanger 14 and a temperature sensor 191, wherein a first pipe orifice 141 of the second heat exchanger 14 is in communication with the first refrigerant pipe orifice 121 of the first heat exchanger 12, a second pipe orifice 142 of the second heat exchanger 14 is in communication with the first refrigerant pipe orifice 121 of the first heat exchanger 12, the temperature sensor 191 is in communication with a first pipe orifice 141 of the second heat exchanger 14, and the temperature sensor 191 detects the temperature of the first pipe orifice 141 of the second heat exchanger 14, thereby improving the control precision of an electronic valve 193 located on the side where the second heat exchanger 14 is located.

Further, one end of the electronic valve 193 is respectively connected with a second refrigerant pipe orifice 122 of the first heat exchanger 12 and the second pipe orifice 142 of the second heat exchanger 14, the other end of the electronic valve 193 is respectively connected with the first refrigerant pipe orifice 121 of the first heat exchanger 12 and the first pipe orifice 141 of the second heat exchanger 14, and the temperature sensor 191 improves the control precision of the electronic valve 193.

With continued reference to Fig. 32, the thermal management system 100 further includes a liquid storage tank 192, wherein the liquid storage tank 192 is in communication with the second pipe orifice 142 of the second heat exchanger 14 and is in communication with the second refrigerant pipe orifice 122 of the first heat exchanger 12. By disposing the liquid storage tank 192 in a high-pressure loop, liquid produced in the first refrigerant sub-loop 19a and a branch of the second heat exchanger 14 is stored.

In another embodiment, the gas-liquid separator 15 can also be disposed at the inlet of the compressor 11 for separating the gas and liquid of the refrigerant without disposing the liquid storage tank 192.

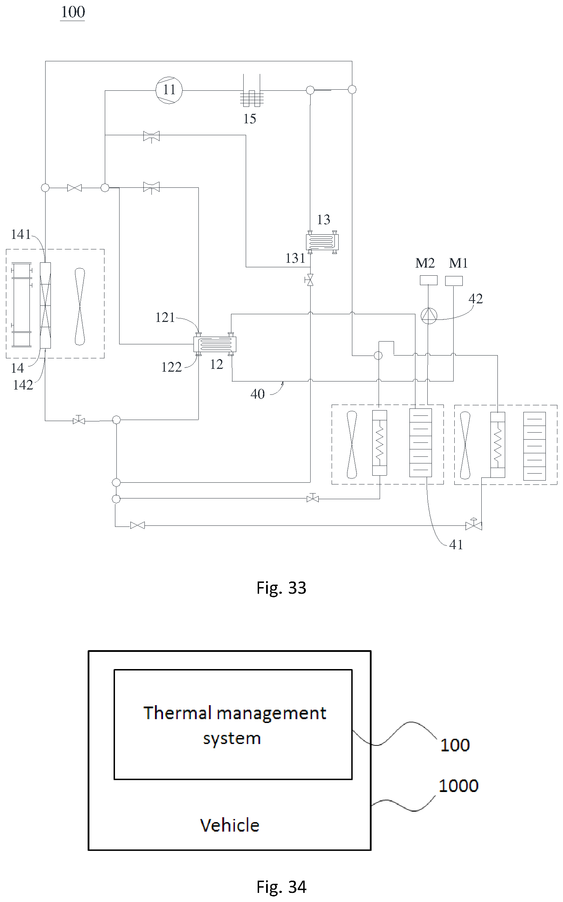

Referring to Fig. 33, the thermal management system 100 includes a gas-liquid separator 15 and a compressor 11, wherein the battery cooler 13, the gas-liquid separator 15 and the compressor 11 are in communication with each other in sequence, and an outlet of the compressor 11 is in communication with a third refrigerant pipe orifice 131 of the battery cooler 13.

Specifically, the battery cooler 13, the gas-liquid separator 15 and the compressor 11 are in communication with each other in sequence to form the second refrigerant sub-loop 19b, so that both the refrigerant in the first refrigerant sub-loop 19a and the refrigerant in the second refrigerant sub-loop 19b enter the battery cooler 13 for mixing, thereby improving the cooling efficiency.

The present invention provides a vehicle. Referring to Fig. 34, the vehicle 1000 includes the thermal management system 100 as described above. The vehicle 1000 is a saloon car, recreational vehicle, a bus, etc. The thermal management system 100 couples the battery water loop 20, the motor water loop 30 and the passenger compartment water loop 40 to realize comprehensive management of the heat of a plurality of modules, so that the energy consumption of the vehicle 1000 is reduced, thereby improving the endurance of the vehicle 1000. Other structures of the vehicle 1000 are not repeatedly described again.

The above descriptions are only some embodiments of the present invention, and are not intended to limit the protection scope of the present invention. Any equivalent apparatuses or equivalent process transformations made by using the content in the specification and drawings of the present invention, or direct or indirect applications to other related technical fields are all included in the patent protection scope of the present invention.

## Claims

1. A thermal management system, comprising:
a refrigerant loop, comprising a compressor, a first heat exchanger and a battery cooler, wherein the first heat exchanger and the battery cooler are in communication with the compressor to form a plurality of refrigerant sub-loops;
a battery water loop, used for adjusting a temperature of a battery , wherein the battery water loop comprises a plurality of battery water sub-loops, and one of the plurality of battery water sub-loops is in communication with the battery cooler;
a motor water loop, used for adjusting a temperature of a motor , wherein the motor water loop comprises a plurality of motor water sub-loops;
a passenger compartment water loop, used for heating of a passenger compartment, wherein the passenger compartment water loop is in communication with the first heat exchanger; and
a control valve module, connected among each of the plurality of battery water sub-loops, each of the plurality of motor water sub-loops and the passenger compartment water loop; and
the control valve module is configured to control each of the plurality of battery water sub-loops and each of the plurality of motor water sub-loops to selectively communicate with the passenger compartment water loop, so that heat exchange is selectively performed among each of the plurality of refrigerant sub-loops, each of the plurality of battery water sub-loops, each of the plurality of motor water sub-loops and the passenger compartment water loop.

2. The thermal management system according to claim 1, wherein the control valve module comprises:
a first control valve assembly, connected between each of the plurality of battery water sub-loops and the passenger compartment water loop; and
a second control valve assembly, connected between each of the plurality of battery water sub-loops and each of the plurality of motor water sub-loops;
wherein the first control valve assembly is configured to control each of the plurality of battery water sub-loops to selectively communicate with the passenger compartment water loop, and the second control valve assembly is configured to control each of the plurality of battery water sub-loops to selectively communicate with each of the plurality of motor water sub-loops, so that heat exchange is selectively performed among each of the plurality of refrigerant sub-loops, each of the plurality of battery water sub-loops, each of the plurality of motor water sub-loops and the passenger compartment water loop.

3. The thermal management system according to claim 2, wherein the refrigerant loop comprises at least four refrigerant sub-loops, the battery water loop comprises two battery water sub-loops, and the motor water loop comprises two motor water sub-loops.

4. The thermal management system according to claim 3, wherein the battery water loop comprises the battery and a battery water pump;
the battery, the battery water pump, the first control valve assembly, the second control valve assembly and the battery cooler are in communication with each other to form a first battery water sub-loop; and
the battery, the battery water pump, the first control valve assembly and the second control valve assembly are in communication with each other to form a second battery water sub-loop.

5. The thermal management system according to claim 4, wherein the motor water loop comprises the motor, a motor water pump and a radiator;
the motor, the motor water pump, the second control valve assembly and the radiator are in communication with each other to form a first motor water sub-loop, and the radiator is used for dissipating heat in the first motor water sub-loop to air; and
the motor, the motor water pump and the second control valve assembly are in communication with each other to form a second motor water sub-loop.

6. The thermal management system according to claim 5, wherein the refrigerant loop further comprises a second heat exchanger, a gas-liquid separator and at least one evaporator, the second heat exchanger is used for exchanging heat with the air, and each of the at least one evaporator is disposed in the passenger compartment;
the second heat exchanger, the compressor and the gas-liquid separator are respectively in communication with each of the at least one evaporator to form at least one first refrigerant sub-loop, and each of the at least one first refrigerant sub-loop is used for the refrigeration of the passenger compartment;
the second heat exchanger, the compressor, the gas-liquid separator and the battery cooler are in communication with each other to form a second refrigerant sub-loop, and the second refrigerant sub-loop absorbs the heat in the first battery water sub-loop by the battery cooler;
the second heat exchanger, the compressor, the gas-liquid separator and the first heat exchanger are in communication with each other to form a third refrigerant sub-loop, and the third refrigerant sub-loop releases heat to the passenger compartment water loop by the first heat exchanger; and
the first heat exchanger, the compressor, the gas-liquid separator and the battery cooler are in communication with each other to form a fourth refrigerant sub-loop, the fourth refrigerant sub-loop absorbs heat in the first battery water sub-loop and the second motor water sub-loop by the battery cooler, and the fourth refrigerant sub-loop releases heat to the passenger compartment water loop by the first heat exchanger.

7. The thermal management system according to claim 6, wherein the first control valve assembly comprises a five-way water valve, the first control valve assembly has a first control valve first end, a first control valve second end, a first control valve third end, a first control valve fourth end and a first control valve fifth end;
a water inlet end and a water outlet end of the first battery water sub-loop are respectively connected with the first control valve second end and the first control valve fifth end of the first control valve assembly, a water inlet end and a water outlet end of the second battery water sub-loop are respectively connected with the first control valve second end and the first control valve first end of the first control valve assembly, and a water inlet end and a water outlet end of the passenger compartment water loop are respectively connected with the first control valve fourth end and the first control valve third end of the first control valve assembly.

8. The thermal management system according to claim 7, wherein the second control valve assembly comprises a five-way water valve, and the second control valve assembly has a second control valve first end, a second control valve second end, a second control valve third end, a second control valve fourth end and a second control valve fifth end;
an other water inlet end and an other water outlet end of the first battery water sub-loop are respectively connected with the second control valve fourth end and the second control valve third end of the second control valve assembly, and an other water inlet end and an other water outlet end of the second battery water sub-loop are also respectively connected with the second control valve fourth end and the second control valve third end of the second control valve assembly; and a water inlet end and a water outlet end of the first motor water sub-loop are respectively connected with the second control valve second end and the second control valve fifth end of the second control valve assembly, and a water inlet end and a water outlet end of the second motor water sub-loop are respectively connected with the second control valve second end and the second control valve first end of the second control valve assembly.

9. The thermal management system according to claim 1, wherein the thermal management system comprises an expansion kettle, and the battery water loop, the motor water loop and the passenger compartment water loop are all in communication with the expansion kettle;
the refrigerant loop further comprises:
an electronic expansion valve, used for controlling the flow rate and pressure of a refrigerant in each of the plurality of refrigerant sub-loops; and
an electromagnetic valve, used for controlling the on/off of each of the plurality of refrigerant sub-loops or changing a flow direction of the refrigerant in each of the plurality of refrigerant sub-loops, so as to selectively control each of the plurality of refrigerant sub-loops to be in a working state.

10. The thermal management system according to claim 1, wherein the refrigerant loop comprises a second heat exchanger, a gas-liquid separator and two evaporators, the two evaporators are respectively disposed in a front-row area and a rear-row area of the passenger compartment, the second heat exchanger, the compressor and the gas-liquid separator are respectively in communication with the two evaporators to form two first refrigerant sub-loops, and the two first refrigerant sub-loops are respectively used for refrigeration of the front-row area and the rear-row area of the passenger compartment;
the passenger compartment water loop comprises a warm air core body and a heating water pump, the warm air core body is disposed in the passenger compartment, the warm air core body, the heating water pump and the first heat exchanger are in communication with each other to form the passenger compartment water loop, and the warm air core body is used for the heating of the passenger compartment; or,
the warm air core body is disposed in the front-row area of the passenger compartment, the thermal management system further comprises a heater, the heater is disposed in the rear-row area of the passenger compartment, and both the warm air core body and the heater are used for the heating of the passenger compartment.

11. The thermal management system according to claim 1, wherein,
the control valve module comprises a multi-way valve and a radiator, the multi-way valve comprises a valve body and a valve core, the valve body is provided with eight valve ports disposed in a circumferential direction of the valve core, and the multi-way valve has a first valve port, a second valve port, a third valve port, a fourth valve port, a fifth valve port, a sixth valve port, a seventh valve port, an eighth valve port and a ninth valve port;
an end of the passenger compartment water loop is in communication with the first valve port, and an other end thereof is in communication with the second valve port;
an end of the motor water loop is in communication with the third valve port, and an other end thereof is in communication with the fourth valve port;
an end of the radiator is in communication with the fourth valve port, and an other end thereof is in communication with the fifth valve port;
an end of the battery water loop is in communication with the sixth valve port, and an other end thereof is in communication with the seventh valve port; and
an end of the battery cooler is in communication with the eighth valve port, and an other end thereof is in communication with the ninth valve port, wherein the seventh valve port and the eighth valve port are a same valve port, or the seventh valve port and the eighth valve port are different valve ports.

12. The thermal management system according to claim 11, wherein the multi-way valve is an eight-way valve, and the seventh valve port and the eighth valve port are the same valve port.

13. The thermal management system according to claim 11, wherein the multi-way valve is a nine-way valve, and the seventh valve port and the eighth valve port are different valve ports.

14. The thermal management system according to claim 12 or 13, wherein the passenger compartment water loop further comprises a first heat exchanger, a warm air core body and a heating water pump, which are in communication with each other in sequence, the first heat exchanger is in communication with the first valve port, and the heating water pump is in communication with the second valve port.

15. The thermal management system according to claim 14, wherein the passenger compartment water loop further comprises a water heater, an inlet of the water heater is in communication with the first heat exchanger, and an outlet of the water heater is in communication with the warm air core body.

16. The thermal management system according to claim 15, wherein the thermal management system comprises a gas-liquid separator and a compressor, the first heat exchanger, the battery cooler, the gas-liquid separator and the compressor are in communication with each other in sequence, and an outlet of the compressor is in communication with a first refrigerant pipe orifice of the first heat exchanger.

17. The thermal management system according to claim 14, wherein the thermal management system further comprises a second heat exchanger and a temperature sensor, a first pipe orifice of the second heat exchanger is in communication with the first refrigerant pipe orifice of the first heat exchanger, a second pipe orifice of the second heat exchanger is in communication with a second refrigerant pipe orifice of the first heat exchanger, and the temperature sensor is in communication with the first pipe orifice of the second heat exchanger.

18. The thermal management system according to claim 17, wherein the thermal management system further comprises a liquid storage tank, the liquid storage tank is in communication with the second pipe orifice of the second heat exchanger and is in communication with the second refrigerant pipe orifice of the first heat exchanger.

19. The thermal management system according to claim 12 or 13, wherein the thermal management system comprises a gas-liquid separator and a compressor, the battery cooler, the gas-liquid separator and the compressor are in communication with each other in sequence, and an outlet of the compressor is in communication with a third refrigerant pipe orifice of the battery cooler.

20. A vehicle, comprising the thermal management system according to any one of claims 1-19.
